# EUROPEAN PATENT SPECIFICATION

(11) **EP 0 689 995 B1**
(45) Date of publication and mention of the grant of the patent: **20.01.1999**
(21) Application number: 95109959.7
(22) Date of filing: 26.06.1995
(51) Int. Cl.: B65B 63/02, B65B 19/10

(54) **Supply unit for feeding groups of tobacco items to a wrapping line**
Vorrichtung zum Zuführen von Gruppen von Tabakartikeln zu einer Umwickelstrasse
Dispositif pour alimenter une ligne d'enveloppement avec des groupes d'articles de tabac

(30) Priority: 30.06.1994 IT BO940304
(43) Date of publication of application: 03.01.1996
(73) Proprietor: G.D SOCIETA' PER AZIONI, I-40100 Bologna (IT)
(72) Inventor: Sassi, Fabio, I-40026 Imola (IT); Portaro, Antonio, I-20100 Milano (IT)
(74) Representative: Jorio, Paolo, Dr. Ing.

(56) References cited:
- EP-A- 0 168 758
- GB-A- 1 112 847

## Description

The present invention relates to a supply unit for feeding groups of tobacco items to a wrapping line.

In particular, the present invention relates to a supply unit for feeding groups of tobacco items to the wrapping line of a packing machine.

The present invention may be used to advantage on cigarette packing machines, to which the following description refers purely by way of example.

Cigarette packing machines are known to feature a supply unit comprising a conveyor with a succession of pockets fed by the conveyor in a given direction, and each housing a respective group of cigarettes withdrawn from a feedbox and arranged with their longitudinal axes parallel to one another and crosswise to the traveling direction. The conveyor is normally so located as to feed the groups successively to a transfer station where pushers transfer each group axially into a respective folding or wrapping spindle normally fitted to a wrapping wheel and defined by a tubular element for housing a respective group. Each folding spindle forms an inner support for a sheet of foil paper, which is folded partly on to the outer surface of the spindle to form a cup-shaped wrapping, which is unloaded axially by the spindle together with the respective group, so as to free the wrapping from the spindle and at the same time insert the group inside the wrapping.

Since the outside dimensions of the folding spindle are obviously the same as the inside dimensions of the wrapping but greater than the outside dimensions of the group, the group must be compressed elastically crosswise before being inserted inside the spindle, to enable it to expand, when extracted from the spindle, and so take up the slack corresponding to the thickness of the spindle.

On a known type of packing machine, transverse compression of the group - which is applied in two directions perpendicular to each other and to the axis of the cigarettes - is performed at the transfer station by an "extruding device" defined by a tubular element in the form of a truncated pyramid, the larger end of which is the same shape and size as the group to be compressed and the outer surface, in section, of the folding spindle, and the smaller end of which is the same shape and size as the inner surface, in section, of the folding spindle. As the cigarettes are fed through the extruding device, they are therefore subjected to severe stress which, over and above a given output speed, may result in irreparable damage.

On a further known type of packing machine disclosed, for example, in EP-A-0 168 758, transverse compression of the group is performed within the relevant pocket, which is mounted for rotation about a shaft and is provided with two cam-operated movable walls arranged at right angles to each other.

Also in this case, owing to the use of a cam drive system to operate the movable walls, and to the fact that such a cam drive system renders it substantially compulsory to compress the group as the relevant pocket rotates about a shaft, the compression is carried out in a very short time, and the cigarettes in the group are subjected to severe stress.

It is an object of the present invention to provide a supply unit designed to overcome the aforementioned drawbacks.

According to the present invention, there is provided a supply unit for feeding groups of tobacco items to a wrapping line; the unit comprising conveyor means for successively feeding groups of tobacco items in a first given direction and along a given path, the conveyor means having a succession of tubular pockets, each for receiving a respective group of tobacco items extending in a second direction crosswise to the first direction, each said tubular pocket extending in said second direction; transfer means located at a transfer station along said path, and for successively transferring the groups to said wrapping line in said second direction; and compressing means for compressing each said group of tobacco items crosswise to said second direction; each tubular pocket having a first fixed wall and a second fixed wall perpendicular to each other and parallel to said second direction, and further having third and fourth movable walls connected to said first and second fixed walls; said compressing means comprising said third and fourth movable walls which are mounted for movement in relation to the relevant tubular pocket, and are respectively parallel to the relevant first and second walls; and actuating means connected to and for moving said third and fourth movable walls respectively towards said first and second fixed walls; characterized in that said actuating means are pressurized-fluid actuating means comprising a first fluid-receiving portion fitted to each said tubular pocket, and a second fluid-feeding portion arranged at a fixed location along said path and adapted to co-operate with said first portion as said first portion moves through said fixed location to feed pressurized fluid into said first fluid-receiving portion and to thereafter seal said first fluid-receiving portion.

The invention will now be described by way of example with reference to the accompanying drawings, in which:
Figure 1 shows a schematic plan view, with parts in section and parts removed for clarity, of a preferred embodiment of the supply unit according to the present invention;
Figure 2 shows a larger-scale, partially sectioned, schematic view of a detail in Figure 1;
Figure 3 shows a section along line III-III in Figure 1;
Figures 4 and 5 show larger-scale, schematic cross sections of a Figure 1 detail in two different operating positions.

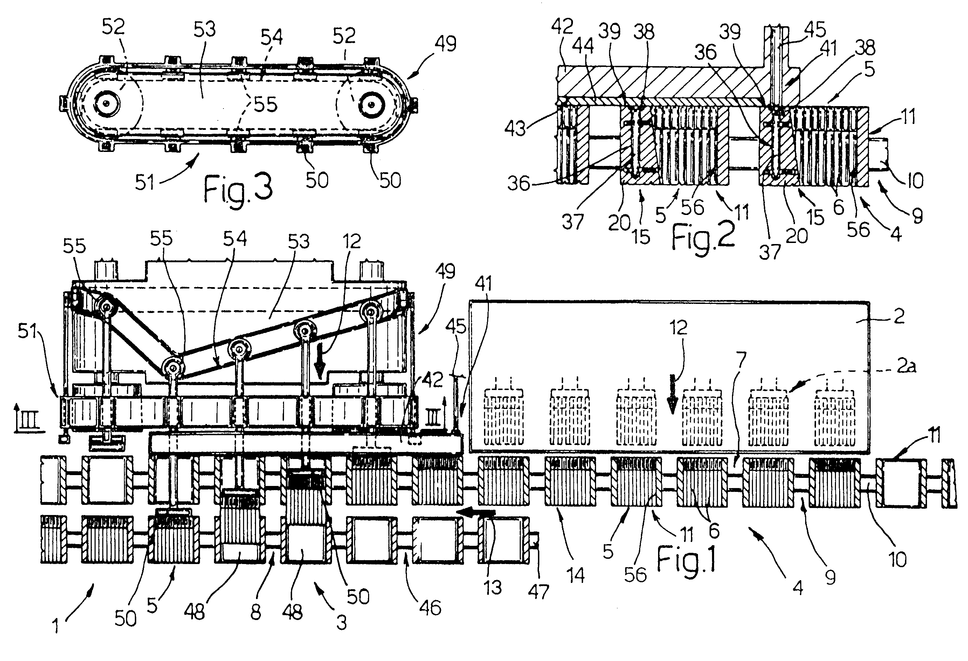

Numeral 1 in Figure 1 indicates a cigarette packing machine comprising an input feedbox 2; a wrapping line 3; and a supply unit 4 for receiving, in known manner, groups 5 of cigarettes 6 from feedbox 2 at a loading station 7, and feeding groups 5 to line 3 at a transfer station 8.

Unit 4 comprises a conveyor 9 in turn comprising a belt 10 fitted with equally spaced pockets 11, each for receiving a respective group 5 extracted by a known extracting unit 2a from feedbox 2 in a direction 12 parallel to the longitudinal axes of cigarettes 6 inside feedbox 2; and conveyor 9 feeds pockets 11 in steps in a direction 13 crosswise to direction 12, and along a substantially straight path 14 extending through stations 7 and 8.

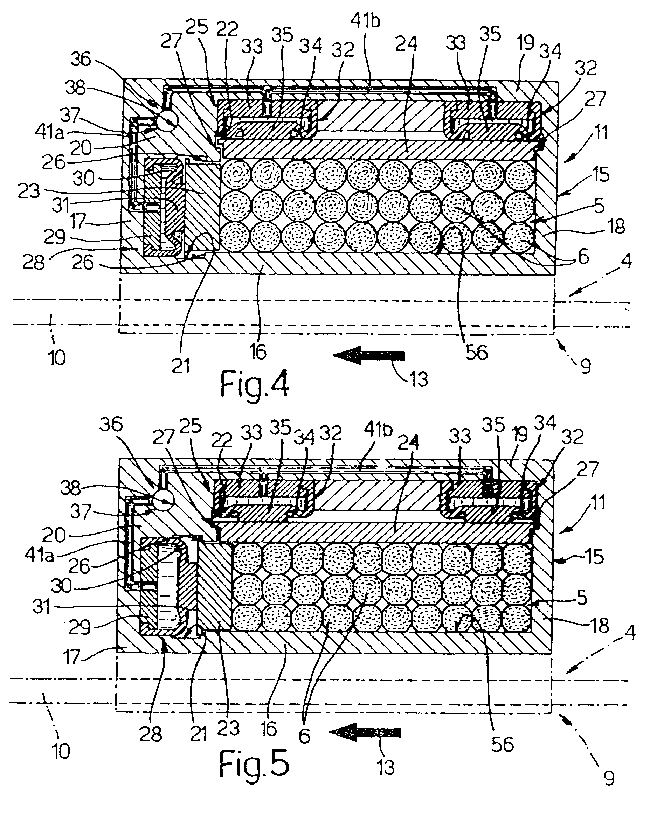

As shown more clearly in Figures 4 and 5, each pocket 11 is defined by a tubular, substantially rectangular-section body 15 comprising a long bottom wall 16 connected integral with belt 10, two short lateral walls 17, 18 crosswise to direction 13 and integral with and extending upwards from opposite ends of bottom wall 16, and a long top wall 19 parallel to wall 16 and connecting the free upper ends of walls 17 and 18. Each pocket 11 also comprises a prismatic, substantially square-section block 20 extending parallel to direction 12 at the joint between walls 17 and 19, and defining, with wall 16 on one side and wall 18 on the other, two chambers 21 and 22 for respective sliding walls 23 and 24 parallel to and facing respective walls 18 and 16, and which are moved by an actuating unit 25 along chambers 21 and 22 towards respective limit stops 26 and 27.

Actuating unit 25 comprises three bellows, one of which, indicated 28, is housed inside chamber 21, is fitted at one end to the inner surface of wall 17 by a base 29, and is closed at the other end by an elastic membrane 30 preferably made of elastomeric material and presenting a pad 31 for fitment to the central portion of wall 23. The other two bellows, indicated 32, are housed inside respective portions of chamber 22, and each is fitted at one end to the inner surface of wall 19 by a respective base 33, and is closed at the other end by a respective elastic membrane 34 preferably made of elastomeric material and presenting a pad 35 for fitment to a respective lateral portion of wall 24. According to a variation not shown, bellows 28 and 32 are replaced by similar bellows made of deformable metal material.

With reference to Figures 2, 4 and 5, each pocket 11 also comprises a pneumatic circuit 36 in turn comprising a main conduit 37 extending along block 20, parallel to direction 12, and terminating externally in an inlet orifice 38 formed in the end surface 39 of block 20 facing feedbox 2; and two branch conduits 41a and 41b, the first communicating with the inside of bellows 28, and the second communicating with the inside of both bellows 32.

As it travels in steps along path 14 to transfer station 8, each pocket 11 is arrested, between one step and the next, at a supply station 41, which is defined by one end of a shutter block 42 presenting a surface 43 in turn presenting a seal 44 and which is brought into contact in fluidtight manner with surface 39 of pocket 11. In station 41, pocket 11 is positioned with orifice 38 aligned with the outlet of the outlet conduit 45 of a compressed air source (not shown), and conduit 45 cooperates in fluidtight manner with conduit 37 which, when pocket 11 leaves station 41, is closed in fluidtight manner by seal 44 to maintain circuit 36 pressurized as pocket 11 travels in direction 13 from station 41 to transfer station 8.

As shown in Figure 1, wrapping line 3 comprises a conveyor 46 in turn comprising a belt 47 fitted with equally spaced known tubular folding spindles 48, each for receiving a respective group 5 extracted from a respective pocket 11 in direction 12 by a transfer unit 49; and conveyor 46 provides for feeding spindles 48 in steps through station 8 in time with pockets 11 and in direction 13.

With reference to Figures 1 and 3, transfer unit 49 comprises a number of pushers 50 which are located at station 8 on the opposite side of conveyor 9 to conveyor 46, are fitted to a conveyor 51 parallel to conveyors 9 and 46, so as to move axially in a direction parallel to direction 12, and are equally spaced along conveyor 51 with the same spacing as the operating steps of conveyors 9 and 46. Conveyor 51 is an endless conveyor looped about two pulleys 52 - one of which is powered - and about a drum type cam 53 presenting a cam groove 54; and each pusher 50 presents a tappet roller 55 engaged inside groove 54, which is so shaped as to move pushers 50 back and forth in direction 12, so as to axially engage respective pockets 11 and gradually transfer respective groups 5 to respective spindles 48.

Operation of unit 4 will now be described relative to one pocket 11, and as of the instant in which empty pocket 11 is fed in steps along path 14 and in direction 13 to loading station 7.

Along the whole portion of path 14 upstream from supply station 41 in direction 13, circuit 36 communicates externally through orifice 38, and walls 23 and 24 are maintained by respective bellows 28 and 32 in the withdrawn position (Figure 4) so as to define, with fixed walls 16 and 18, a chamber 56 which, in cross section perpendicular to direction 12, is substantially rectangular and of such a size as to receive group 5 undeformed, i.e. as it is fed out of feedbox 2. When pocket 11 is arrested at supply station 41 with block 20 contacting shutter block 42 in fluidtight manner, compressed air is supplied to circuit 36 along conduit 45 and through orifice 38, so as to deform bellows 28, 32, push respective walls 23, 24 towards walls 18, 16 and against respective stops 26, 27 (Figure 5), and so reduce the cross section of chamber 56 to the same size as the inside of spindles 48. Which reduction in the cross section of chamber 56 is accompanied by a similar reduction in the cross section of group 5, which, until and during operation of pushers 50, is maintained compressed inside chamber 56 by shutter block 42 fluidtight sealing conduit 37 as pocket 11 moves from supply station 41 to and through transfer station 8. This therefore enables group 5 to be transferred to respective spindle 48 with absolutely no axial compression, and the aforementioned extruding devices commonly used on known supply units to be dispensed with.

Since each group 5 inside pocket 11 is subjected to static compression in two perpendicular directions, subsequent springback of the group when unloaded from spindle 48 provides for perfectly compensating for the wall thickness of spindle 48, and so enabling the formation of foil wrappings (not shown) adhering perfectly to the outer surfaces of group 5.

## Claims

1. A supply unit for feeding groups of tobacco items to a wrapping line; the unit (4) comprising conveyor means (9) for successively feeding groups (5) of tobacco items (6) in a first given direction (13) and along a given path (14), the conveyor means (9) having a succession of tubular pockets (11), each for receiving a respective group (5) of tobacco items (6) extending in a second direction (12) crosswise to the first direction (13), each said tubular pocket (11) extending in said second direction (12); transfer means (49) located at a transfer station (8) along said path (14), and for successively transferring the groups (5) to said wrapping line (3) in said second direction (12); and compressing means (25) for compressing each said group (5) of tobacco items (6) crosswise to said second direction (12); each tubular pocket (11) having a first fixed wall (18) and a second fixed wall (16) perpendicular to each other and parallel to said second direction (12), and further having third and fourth movable walls (23, 24) connected to said first and second fixed walls (18, 16); said compressing means (25) comprising said third and fourth movable walls (23, 24) which are mounted for movement in relation to the relevant tubular pocket (11), and are respectively parallel to the relevant first and second walls (18, 16); and actuating means (45, 42, 36) connected to and for moving said third and fourth movable walls (23, 24) respectively towards said first and second fixed walls (18, 16); characterized in that said actuating means (45, 42, 36) are pressurized-fluid actuating means comprising a first fluid-receiving portion (36) fitted to each said tubular pocket (11), and a second fluid-feeding portion (45, 42) arranged at a fixed location (41) along said path and adapted to co-operate with said first portion (36) as said first portion (36) moves through said fixed location (41) to feed pressurized fluid into said first fluid-receiving portion (36) and to thereafter seal said first fluid-receiving portion (36).

2. A unit as claimed in Claim 1, characterized in that said first fluid-receiving portion (36) is a bellows type portion comprising, for each said pocket (11), at least a membrane (30, 34) connected to a respective said movable wall (23, 24).

3. A unit as claimed in Claim 1 or 2, characterized in that said second fluid-feeding portion (45, 42) comprises pressurized fluid supply means (45) located at said fixed location (41), which is arranged along said path (14), upstream from said transfer station (8) in said first direction (13); each said pocket (11) comprising connecting means (38) for connecting said first portion (36) to said fluid supply means (45).

4. A unit as claimed in any of the preceding Claims, characterized in that said second fluid-feeding portion (45, 42) comprises fixed shutter means (42) extending along said path (14) and between said fixed location (41) and said transfer stations (8), for sealing said first fluid-receiving portion (36) in a fluidtight manner.

5. A unit as claimed in Claim 3 or 4, characterized in that each said membrane (30; 34) is made of elastically deformable material, and is connected to the outer surface of a respective said movable wall (23; 24).

6. A unit as claimed in Claim 5, characterized in that each said membrane (30; 34) is bellows-shaped.

## Patentansprüche

1. Eine Zufuhreinheit, um Gruppen von Tabakartikeln einer Einwickelstraße zuzuführen; die Einheit (4) umfaßt: Fördermittel (9), um aufeinanderfolgend Gruppen (5) von Tabakartikeln (6) in einer ersten vorgegebenen Richtung (13) und längs einer vorgegebenen Bahn (14) zu transportieren, wobei die Fördermittel (9) eine Folge von taschenartigen Hohlkörpern (11) jeweils für die Aufnahme einer zugeordneten Gruppe (5) von sich in einer zweiten, zur ersten Richtung (13) kreuzweisen Richtung (12) erstreckenden Tabakartikeln (6) besitzen und jeder der genannten taschenartigen Hohlkörper (11) in der besagten zweiten Richtung (12) verläuft; Überführungseinrichtungen (49), die an einer längs der erwähnten Bahn (14) liegenden Überführungsstation (8) angeordnet sind, um aufeinanderfolgend die Gruppen (5) in der besagten zweiten Richtung (12) zu der genannten Einwickelstraße (3) zu überführen; und Druckmittel (25), um jede erwähnte Gruppe (5) von Tabakartikeln (6) quer zu der besagten zweiten Richtung (12) einem Druck auszusetzen; wobei jeder taschenartige Hohlkörper (11) eine erste feste Wand (18) sowie eine zweite feste Wand (16), die zueinander rechtwinklig sowie zu der besagten zweiten Richtung (12) parallel sind, und ferner dritte sowie vierte bewegbare Wände (23, 24), die mit der besagten ersten und der besagten zweiten Wand (18, 16) verbunden sind, besitzt; wobei die genannten Druckmittel (25) die erwähnten dritten und vierten bewegbaren Wände (23, 24) einschließen, welche für eine Bewegung mit Bezug zu dem zugehörigen taschenartigen Hohlkörper (11) montiert und jeweils zu der entsprechenden ersten sowie zweiten Wand (18, 16) parallel sind; und wobei mit den erwähnten dritten sowie vierten bewegbaren Wänden (23, 24) Betätigungsmittel (45, 42, 36) verbunden sind, um diese dritten sowie vierten Wände jeweils zu den besagten ersten und zweiten festen Wänden (18, 16) hin zu verlagern; dadurch gekennzeichnet, daß die besagten Betätigungsmittel (45, 42, 36) durch ein Druckfluid betriebene Mittel sind, die ein erstes, an jedem der genannten taschenartigen Hohlkörper (11) angebrachtes Fluidempfangsteil (36) sowie ein zweites, Fluid zuführendes Teil (45, 42), das an einem festen Ort (41) längs der erwähnten Bahn angeordnet sowie zum Zusammenwirken mit dem genannten ersten Teil (36) imstande ist, wenn sich das genannte erste Teil (36) durch den erwähnten festen Ort (41) hindurchbewegt, um Druckfluid in das genannte erste Fluidempfangsteil (36) einzuführen und danach das genannte erste Fluidempfangsteil (36) abzudichten, umfassen.

2. Eine Einheit nach Anspruch 1, dadurch gekennzeichnet, daß das besagte erste Fluidempfangsteil (36) ein Bauteil vom Balgtyp ist, das für jeden der genannten taschenartigen Hohlkörper (11) mindestens eine Membran (30, 34) umfaßt, die mit einer zugeordneten der erwähnten bewegbaren Wände (23, 24) verbunden ist.

3. Eine Einheit nach Anspruch 1 oder 2, dadurch gekennzeichnet, daß das genannte zweite Fluidzufuhrteil (45, 42) Druckfluid-Zufuhrmittel (45) umfaßt, die an dem erwähnten, in der genannten ersten Richtung (13) längs der erwähnten Bahn (14) stromauf von der besagten überführungsstation (8) befindlichen festen Ort (41) angeordnet sind; wobei jeder der genannten taschenartigen Hohlkörper (11) Anschlußeinrichtungen (38) enthält, um das besagte erste Teil (36) mit den erwähnten Fluidzufuhrmitteln (45) zu verbinden.

4. Eine Einheit nach einem der vorhergehenden Ansprüche, dadurch gekennzeichnet, daß das genannte zweite Fluidzufuhrteil (45, 42) ortsfeste Verschlußeinrichtungen (42), die sich längs der erwähnten Bahn (14) und zwischen dem erwähnten festen Ort (41) sowie den besagten Überführungsstationen (8) erstrecken, umfaßt, um das besagte erste Fluidempfangsteil (36) in einer fluiddichten Weise abzuschließen.

5. Eine Einheit nach Anspruch 3 oder 4, dadurch gekennzeichnet, daß jede der erwähnten Membranen (30, 34) aus einem elastisch verformbaren Material gefertigt und mit der Außenfläche einer jeweils zugeordneten der erwähnten bewegbaren Wände (23, 24) verbunden ist.

6. Eine Einheit nach Anspruch 5, dadurch gekennzeichnet, daß jede erwähnte Membran (30, 34) balgartig ausgestaltet ist.

## Revendications

1. Unité d'alimentation pour amener des groupes d'articles de tabac à une ligne d'enveloppement ; l'unité (4) comportant un moyen transporteur (9) destiné à amener successivement des groupes (5) d'articles (6) de tabac dans une première direction donnée (13) et suivant un trajet donné (14), le moyen transporteur (9) ayant une succession d'alvéoles tubulaires (11), destinés chacun à recevoir un groupe respectif (5) d'articles (6) de tabac s'étendant dans une seconde direction (12) transversale à la première direction (13), chaque alvéole tubulaire (11) s'étendant dans ladite seconde direction (12) ; des moyens de transfert (49) placés dans un poste (8) de transfert le long dudit trajet (14) et destinés à transférer successivement les groupes (5) à ladite ligne (3) d'enveloppement dans ladite seconde direction (12) ; et des moyens de compression (25) destinés à comprimer chacun des groupes (5) d'articles (6) de tabac transversalement à ladite seconde direction (12) ; chaque alvéole tubulaire (11) ayant une première paroi fixe (18) et une deuxième paroi fixe (16) perpendiculaires entre elles et parallèles à ladite seconde direction (12), et ayant en outre des troisième et quatrième parois mobiles (23, 24) reliées auxdites première et deuxième parois fixes (18, 16) ; lesdits moyens (25) de compression comportant lesdites troisième et quatrième parois mobiles (23, 24) qui sont montées de façon à se déplacer par rapport à l'alvéole tubulaire concerné (11), et ils sont respectivement parallèles aux première et deuxième parois concernées (18, 16) ; et des moyens d'actionnement (45, 42, 36) reliés auxdites troisième et quatrième parois mobiles (23, 24) et destinés à les déplacer respectivement vers lesdites première et deuxième parois fixes (18, 16) ; caractérisée en ce que lesdits moyens d'actionnement (45, 42, 36) sont des moyens d'actionnement à fluide sous pression comportant une première partie (36) de réception de fluide montée sur chaque alvéole tubulaire (11), et une seconde partie (45, 42) d'amenée en fluide agencée en un emplacement fixe (41) le long dudit trajet et conçue pour coopérer avec ladite première partie (36) pendant que ladite première partie (36) se déplace à travers ledit emplacement fixe (41) pour introduire un fluide sous pression dans ladite première partie (36) de réception de fluide et pour fermer ensuite de façon étanche ladite première partie (36) de réception de fluide.

2. Unité selon la revendication 1, caractérisée en ce que ladite première partie (36) de réception de fluide est une partie du type soufflet comportant, pour chacun desdits alvéoles (11), au moins une membrane (30, 34) reliée à une paroi mobile respective (23, 24).

3. Unité selon la revendication 1 ou 2, caractérisée en ce que ladite seconde partie (45, 42) d'amenée en fluide comporte un moyen (45) d'alimentation en fluide sous pression situé audit emplacement fixe (41), qui est agencé le long dudit trajet (14), en amont dudit poste (8) de transfert dans ladite première direction (13) ; chacun desdits alvéoles (11) comportant un moyen (38) de raccordement pour raccorder ladite première partie (36) audit moyen (45) d'amenée en fluide.

4. Unité selon l'une quelconque des revendications précédentes, caractérisée en ce que ladite seconde partie (45, 42) d'amenée de fluide comporte un moyen de fermeture fixe (42) s'étendant le long dudit trajet (14) et entre ledit emplacement fixe (41) et lesdits postes de transfert (8), pour obturer de façon étanche au fluide ladite première partie (36) de réception de fluide.

5. Unité selon la revendication 3 ou 4, caractérisée en ce que chaque membrane (30 ; 34) est formée d'une matière élastiquement déformable, et est reliée à la surface extérieure de l'une, respective, desdites parois mobiles (23 ; 24).

6. Unité selon la revendication 5, caractérisée en ce que chacune desdites membranes (30 ; 34) est en forme de soufflet.
